# EUROPEAN PATENT APPLICATION

(11) **EP 2 479 065 A2**
(43) Date of publication of application: **25.07.2012**
(21) Application number: 12151992.0
(22) Date of filing: 20.01.2012
(51) Int. Cl.: B60R 9/00, B60R 11/00

(54) **Accessory mounting assembly.**

(30) Priority: 21.01.2011 US 201161435135 P
(71) Applicant: National Cycle, Inc., Maywood, IL 60153 (US)
(72) Inventor: Willey, Barry A., Iverness, Illinois 60067 (US)
(74) Representative: W.P. Thompson & Co.

(57) **Abstract**

An accessory mounting assembly (30) and method of mounting to a vehicle may include an accessory bracket (28) removably connected to a mounting bracket (26). The accessory bracket (28) may include a connection mechanism (38) including a biasing portion (58), a pre-load portion (60), a lock portion (64), and a release portion (62). The mounting bracket (26) may include a lock groove (70) configured to align in registration a slot (42) on the accessory bracket (28) and engage the lock portion (64) in order to prevent unintentional removal of the accessory bracket (28) from the mounting bracket (26).

## Description

### Related Applications

This application is a non-provisional patent application that claims the benefit of and the priority from U.S. Provisional Patent Application No. 61/435,135, filed January 21, 2011, titled ACCESSORY MOUNTING ASSEMBLY.

### Field of the Disclosure

The present disclosure relates to methods and assemblies for connecting an accessory such as a windshield, top-case, saddle bags, luggage rack, etc. to a vehicle.

### Background

It is often desirable to install a windshield, top-case, saddle bags, luggage rack, etc. to a vehicle, such as a scooter, motorcycle, all-terrain vehicle ("ATV"), utility task vehicle ("UTV"), a recreational off-highway vehicle ("ROV") or any other power product vehicle to provide additional protection and comfort or functionality for the passenger(s).

For example only and not in any limiting manner, scooters these days are highly styled. Often, they are a part of an overall fashion statement. When an owner desires to add accessories, such as a windshield or luggage rack for a top-case, the owner doesn't want to spoil the lines or aesthetics of the scooter with a support bracket apparatus that is cobbled together and bolted onto and underneath the mirror mounts. Such a haphazard approach looks quite out of place and ugly. A large percentage, even a majority of scooters in Western Europe are manufactured with the intent to fit windshields as well as luggage racks after the purchase of the scooter. By providing the appropriate structure, the fitting of such accessories maintains a more professional appearance overall and integrates with the theme of the vehicle. Accordingly, accessories can enhance the overall appearance of the scooter. Moreover, because of the location of the mounting, in the case of a windshield, the rider will constantly be looking through or even at the windshield, so a solid and proper mounting assembly is desirable. Therefore, there exists a need for improved methods and assemblies for connecting an accessory to a vehicle.

### Brief Description of the Drawings

The following disclosure as a whole may be best understood by reference to the provided detailed description when read in conjunction with the accompanying drawings, drawing description, abstract, background, field of the disclosure, and associated headings. Identical reference numerals when found on different figures identify the same elements or a functionally equivalent element. The elements listed in the abstract are not referenced but nevertheless refer by association to the elements of the detailed description and associated disclosure.

FIG. 1 is a perspective exploded view of an accessory mounting assembly in accordance with one embodiment of the present disclosure.

FIG. 2 is a side elevation view of the accessory mounting assembly of FIG. 1, illustrating one of the methods of assembly for connecting an accessory to the vehicle in accordance with the present disclosure.

FIG. 3 is a side elevation view of the accessory mounting assembly illustrated in FIG. 2, further illustrating one of the methods of assembly.

FIG. 4 is a detailed side elevation view of the accessory mounting assembly illustrated in FIG. 2, further illustrating one of the methods of assembly.

FIG. 5 is an opposite detailed side elevation view of the accessory mounting assembly illustrated in FIG. 4, illustrating a release mechanism.

FIG. 6 is the opposite detailed side elevation view of the accessory mounting assembly illustrated in FIG. 4, illustrating one of the methods of disassembly for disconnecting an accessory from the vehicle.

FIG. 7 is a perspective exploded view of an accessory mounting assembly in accordance with one embodiment of the present disclosure.

FIG. 8 is a front elevation view of the accessory mounting assembly of FIG. 7, illustrating a mounting bracket secured to the vehicle.

FIG. 9 is a side elevation view and partial section view of the accessory mounting assembly illustrated in FIG. 7 illustrating one of the methods of assembly.

FIG. 10 is a detailed side elevation and partial section view of the accessory mounting assembly illustrated in FIG. 9, further illustrating one of the methods of assembly.

FIG. 11 is a detailed side elevation and partial section view of the accessory mounting assembly illustrated in FIG. 9, further illustrating one of the methods of assembly.

FIG. 12 is a detailed side elevation and partial section view of the accessory mounting assembly illustrated in FIGS. 7 and 9-11, illustrating a connection or lock/release mechanism.

FIG. 13 is a detailed side elevation and partial section view of the connection or lock/release mechanism illustrated in FIG. 12, illustrating displacement of a lock portion of the connection mechanism.

FIG. 14 is a detailed view of the accessory mounting assembly illustrated in FIG. 7, illustrating a portion of an accessory bracket in an unsecured configuration.

FIG. 15 is a detailed view of the accessory mounting assembly illustrated in FIG. 7, illustrating a portion of an accessory bracket in a secured configuration.

FIG. 16 is a detailed side elevation and partial section view of the connection or lock/release mechanism illustrated in FIG. 12, illustrating displacement of the lock portion of the connection mechanism as a result of movement of a release portion in the slot in one of the methods of disassembly.

### Detailed Description of the Preferred Embodiments

The present disclosure is not limited to the particular details of the apparatus depicted, and other modifications and applications may be contemplated. Further changes may be made in the apparatus, device or methods without departing from the true spirit of the scope of the disclosure herein involved. It is intended, therefore, that the subject matter in this disclosure should be interpreted as illustrative, not in a limiting sense.

In one aspect of the present disclosure, an accessory mounting assembly may include a mounting bracket and an accessory bracket removably connected to the mounting bracket. The mounting bracket may include a connection mechanism having a lock portion and a release portion with a free distal end. The accessory bracket may include a lock groove configured to align in registration with and engage the lock portion in order to prevent unintentional removal of the accessory bracket from the mounting bracket.

In another aspect of the present disclosure, the lock groove may be defined by projections that define an opening of the lock groove and a ramp disposed adjacent one of the projections. The ramp may be configured to displace the lock portion from an initial position to facilitate an audible click when the lock portion is retuned to the initial position to be disposed in the lock groove. In one embodiment, the projections may be disposed above the lock portion when the lock portion is disposed in an initial position.

In yet another aspect of the present disclosure, an alignment portion may be connected to the mounting bracket that includes a pocket configured to engage a mounting flanges of the accessory bracket. The pocket may be defined by a pair of alignment flanges spaced by a spacers that each include a guide portion that leads into the pocket. In one embodiment, the guide portions may define an included angle of approximately 30 degrees to approximately 60 degrees.

In still another aspect of the present disclosure, the mounting bracket may include an alignment portion connected to the mounting bracket by connection hardware including a pair of offset fastener assemblies. The alignment portion may include a pocket defined by a pair of spaced alignment flanges separated by a pivot spacer associated with one of the fastener assemblies and an alignment spacer associated with another of the fastener assemblies. The pocket may be configured to engage a mounting flange of the accessory bracket. The alignment flanges may each include a groove aligned in registration with a portion of a slot in the mounting bracket. A pre-load portion of the connection mechanism may be connected to the one of the fastener assemblies, a central biasing portion of the connection mechanism may be connected to the another of the fastener assemblies and the release portion may be contiguous with the another of the fastener assemblies. The accessory bracket may include a pivot groove configured to engage the pivot spacer and an alignment groove configured to engage the alignment spacer. The lock portion may be movable from an initial position, normally biased into contact with a first end of the slot and the alignment grooves, by a ramp, defined on the accessory bracket that is adjacent one of a pair of opposing offset projections that define an opening of the lock groove when the accessory bracket is pivoted about the pivot groove when in engagement with the pivot spacer, to facilitate an audible click when the alignment groove engages the alignment spacer and the lock portion is returned to the initial position to be disposed in the lock groove.

In a further aspect of the present disclosure, a method of installing an accessory on a vehicle including a mounting bracket having a pivot spacer and a alignment spacer may include: connecting the accessory to an accessory bracket including a pivot groove and an alignment groove; engaging the pivot spacer with the pivot groove to pivotally connect the accessory bracket to the mounting bracket; pivoting the accessory bracket to move the alignment groove toward the alignment spacer; and displacing a lock portion of a connection mechanism disposed on one of the accessory bracket and the mounting bracket from an initial position to facilitate an audible click when the alignment groove engages the alignment spacer and the lock portion is returned to the initial position to be disposed in a lock groove formed in one of the accessory bracket and the mounting bracket.

In another further aspect of the present disclosure, an accessory mounting assembly may include an accessory bracket removably connected to a mounting bracket by a pair of mounting ears. The accessory bracket may include a slot and a connection mechanism including a lock portion extending through the slot and a release portion having a free distal end. A mounting bracket may include a lock groove configured to align in registration with a portion of the slot and engage the lock portion in order to prevent unintentional removal of the accessory bracket from the mounting bracket.

In another still further aspect of the present disclosure, the lock groove may be defined in the mounting bracket by opposing offset projections that define an opening of the groove and a ramp disposed adjacent one of the projections. The ramp may be configured to displace the lock portion from an initial position to facilitate an audible click when the lock portion is returned to the initial position to be disposed in the lock groove. The projections may be disposed above the lock portion when the lock portion is disposed in an initial position.

In another yet further aspect of the present disclosure, a second mounting bracket and each of the mounting and the second mounting brackets may include a pivot spacer offset from an alignment spacer to each cooperatively engage the pair of mounting ears. The offset may be selected from one or a combination of the group consisting of horizontal, lateral, width, vertical, longitudinal, height, length, depth, fore-aft, multi-dimensional and angular. The mounting and second mounting brackets may include alignment flanges that define a pocket, the alignment flanges may each include a guide portion that leads into the pocket. The guide portions may define a guide included angle of approximately 30 degrees to approximately 60 degrees. An alignment included angle may be defined between the alignment flanges of approximately 45 degrees to approximately 135 degrees.

In yet still another aspect of the present disclosure, a lock assembly may be configured to selectively securely removably engage the accessory bracket such that access to the free distal end of the release portion is prohibited.

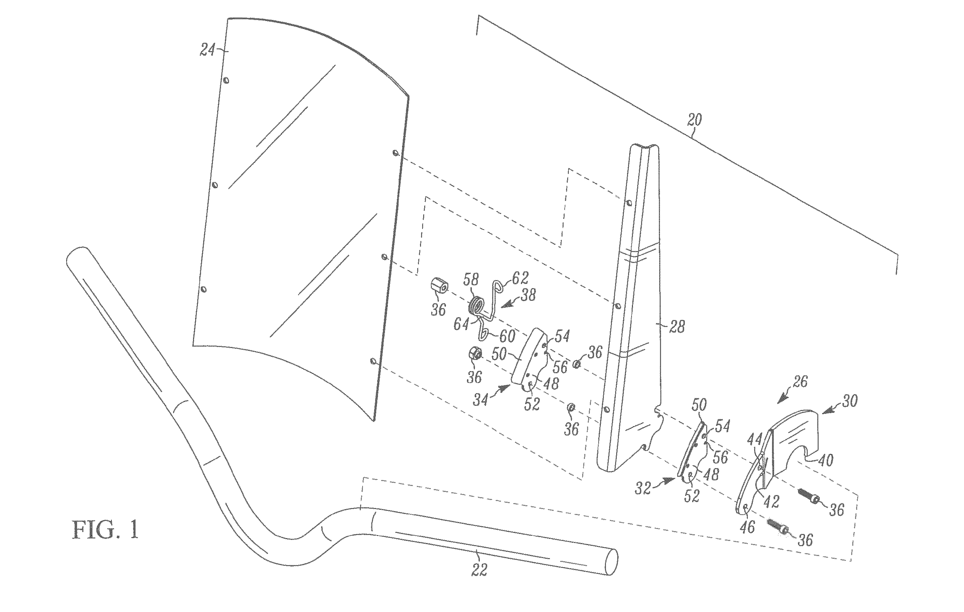

FIG. 1 illustrates a perspective exploded view of one embodiment of an accessory mounting assembly 20 for connection to a vehicle 22 and an accessory 24 in accordance with one embodiment of the present disclosure. The accessory mounting assembly 20 may include a mounting bracket 26 and an accessory bracket 28, such as, for example for use in connection with mounting a windshield, rack, top-case, saddle bag, or the like, etc. to achieve the intended functionality. In one embodiment, the mounting bracket 26 may include a mounting flange 30, a pair of opposing alignment flanges 32, 34, connection hardware 36 and a connection or lock/release mechanism 38. In one embodiment, a pair of accessory mounting assemblies 20 may be used cooperatively to connect the accessory, such as, for example only, the windshield 24, to the vehicle, such as, for example only, a handlebar of a scooter (the remainder of the pair of mounting assemblies will not be illustrated for the sake of brevity and clarity, but will be understood by one of ordinary skill in the art as substantially identical to and/or mirror image of the accessory mounting assembly 20 described herein).

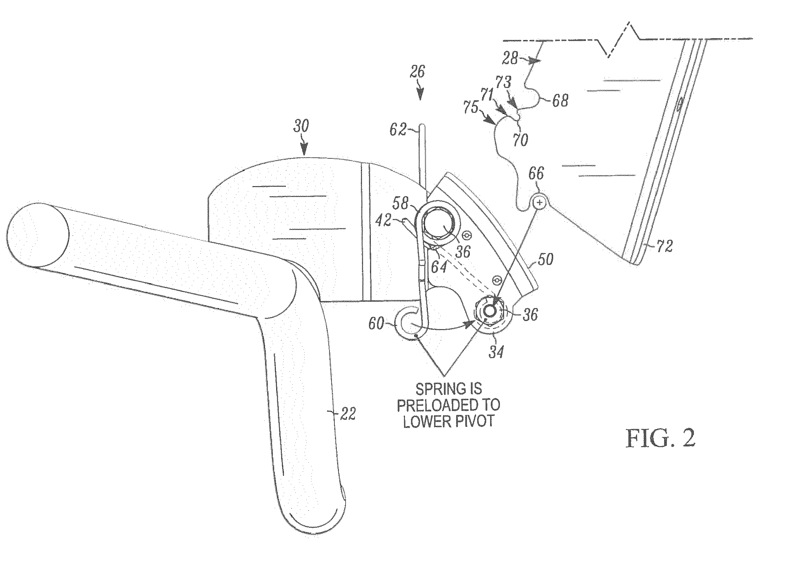

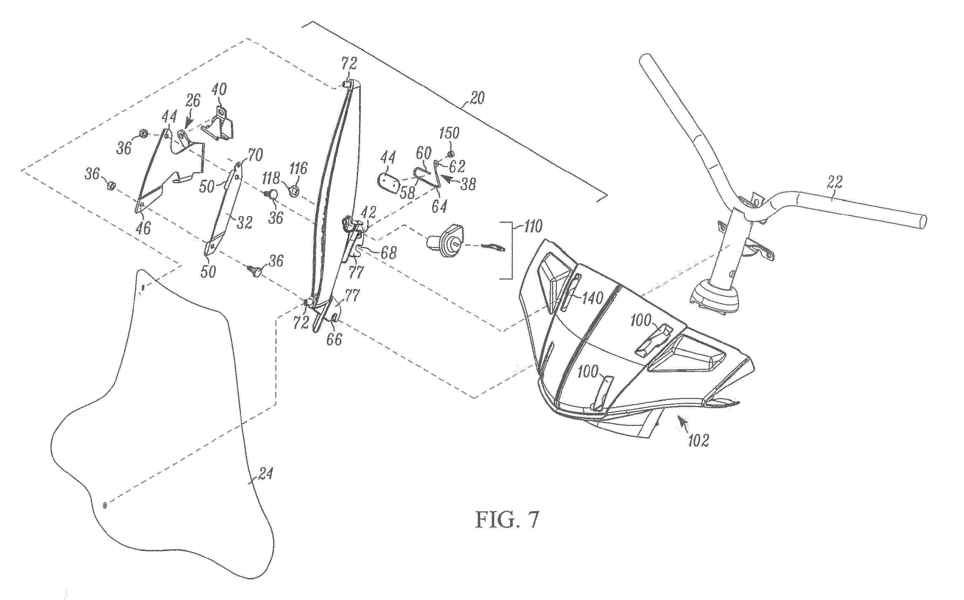

Preferably, the mounting flange 30 may include a notch 40 to facilitate interface, engagement or connection with the vehicle 22, a slot 42 adjacent the notch 40 for the spring-like connection or lock/release mechanism 38, as described below, and a pair of apertures 44, 46 disposed adjacent the slot 40 and distal from the notch 40. In one embodiment, the notch 40 is configured complementary to a component of the vehicle, such as, for example, the handlebar 22 of a scooter to facilitate a welded fixation (as shown in FIGS. 2-4), bonding or other suitable method, procedure, or the like, etc. to achieve the intended functionality. One of ordinary skill in the art will recognize that the notch 40 may be replaced by other available or suitable structure to facilitate a secure connection to the vehicle, as desired. In one embodiment, a set of openings may be provided in a vehicle cowling or similar body part to allow the mounting bracket 26 and the mounting flange 30 in particular, to disappear so as to not be visible when such cowling or body part is mounted and yet be held steadfast from below. Such set of openings are not shown in this embodiment, but are conventionally understood by one of ordinary skill in the art for similar applications, such as in FIG. 7 herein. Generally, in one embodiment, the openings may be preferably asymmetrical about the headlight for a windshield application, for example, but are not required to have such configuration. The mounting bracket 30 in one embodiment may be metal inert gas or MIG welded to the handlebar 22 and subsequently painted black which then goes through the normal anti-corrosion black paint line when the handlebar 22 is finished.

Preferably, the pair of opposing alignment flanges 32, 34 may include a connection portion 48 and a guide portion 50 angularly disposed with respect to the connection portion 48. In one embodiment, the included angle between the pair of guide portions may be approximately 45 degrees, or any other suitable angle between 0.5-89.5 degrees in order to guide insertion of the accessory bracket 28. A pair of mounting holes 52, 54 and a groove 56 may also be formed on the connection portion 48. Preferably, the groove 56 may be aligned in registration with a portion of the slot 42. The mounting holes 52, 54 preferably align in registration with the apertures 44, 46 so that the connection hardware 36 may secure the alignment flanges 32, 34 to the mounting flange 30 in order to define a pocket configured by the spacers or washers 36 that dispose the alignment flanges 32, 34 a desired distance apart to securely mount the accessory bracket 28. The included angle of the guide portions 50 of the pocket functions to guide the insertion of the windshield bracket 28 into the pocket. The guide portions in one embodiment may preferably define any included angle of approximately 30 degrees to approximately 60 degrees and more preferably in the range of approximately 40 degrees to approximately 50 degrees and most preferably at a nominal included angle of approximately 45 degrees, tapering to the opening that corresponds to the thickness dimension or slightly undersized, for example 0.001" *-* 0.050", of the windshield bracket 28, plus a small tolerance. In one embodiment, the pocket could be made for a windshield bracket of a thickness dimension of 3/8" or 10MM in a round bracket design or a flat stock vertical bracket design in ∼2mm thick stainless steel and sheet fabricated and formed. The alignment flanges 32, 34 are preferably made from stainless steel or other suitable material (e.g., synthetic, metal, composite, etc.) to resist abrasion and corrosion from the mounting/dismounting activity. The connection hardware 36 may include offset and/or spaced apart fastener assemblies comprised of bolts, nuts, spacers and/or other suitable conventional fastener components desirable to connect the alignment flanges 32, 34 to the mounting flange 30, as described above. In one embodiment, the spacers may include a pivot spacer associated with one of the fasteners assemblies or a alignment spacer associated with another of the fastener assemblies. Preferably, the connection hardware 36 is also formed from stainless steel, other suitable material (e.g., synthetic, metal, composite, etc.) or has a suitable anti-corrosion coating that satisfies the salt spray corrosion resistance requirements of an original equipment manufacturer.

Preferably, the selectively actuate-able connection or lock/release mechanism 38 may include a wire formed into a spring-like configuration, as shown in FIGS. 1-6, having a central wound portion 58, a pre-load portion 60, a release portion 62 and a lock portion 64. The central wound portion 58 may be removably mounted over and movably connected to the top or uppermost connection hardware 36 (or the another of the fastener assemblies), which extends beyond the alignment flange 34 so as to permit movement such top or uppermost connection hardware (e.g., a somewhat loose slip fit, etc.). The pre-load portion 60 extends from one side of the central wound portion 58 and has a distal end selectively removably connected or secured to the bottom or lowermost connection hardware 36 (or the one of the fastener assemblies, as shown by the arrow and dashed image of the pre-load portion) that also defines a pivot point for the accessory bracket 28. The release portion 62 extends from another side of the central wound portion 58 to a distal free end and is passed through the slot 42 so that the lock portion 64 is disposed within the slot 42 prior to connection of the central wound portion 58 and the pre-load portion 60, as described above. The lock portion 64, when installed, also engages the grooves 56 formed in each of the alignment flanges 32, 34. The connection or lock/release mechanism 38 automatically performs the locking function.

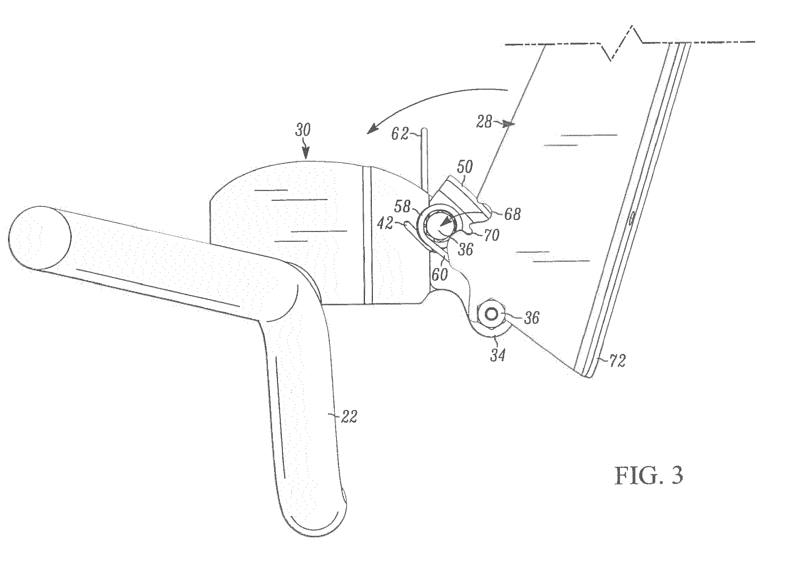

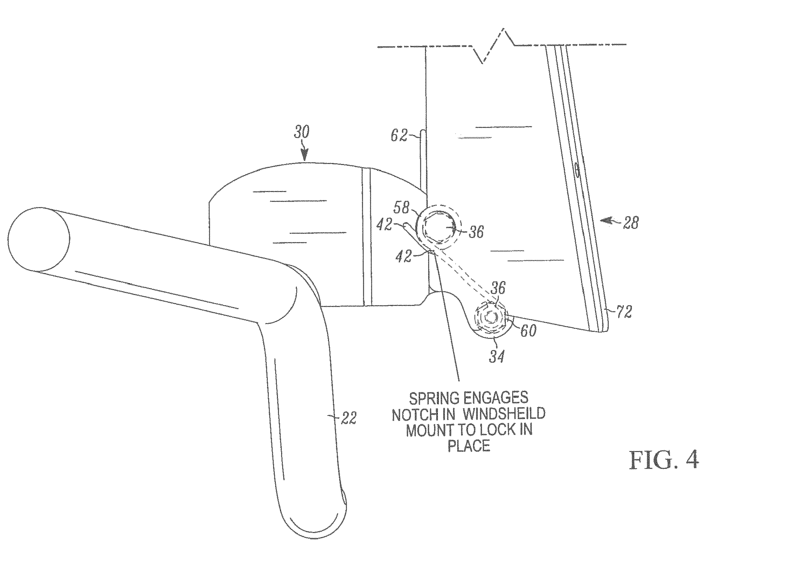

FIGS. 2-4 illustrate side elevation views of the accessory mounting assembly 20 of FIG. 1, and one of the embodiments and methods of connecting an accessory 28 to the vehicle 22 in accordance with the present disclosure. In one embodiment, the accessory bracket 28 may include a mounting flange 72, that may have apertures to further secure other components, such as the windshield 24 or other suitable structure, a pivot groove 66, that is configured to engage the bottom or lowermost connection hardware 36 (preferably, the pivot spacer associated with the one of the fastener assemblies, as shown by the arrow in FIG. 2) in the pocket or between the alignment guides 32, 34 (as shown in FIG. 3), a lock groove 70, that is configured to align in registration with a portion of the slot 42 and to engage the lock portion 64 of the connection or lock/release mechanism 38 to retain the accessory bracket 28 secured to the mounting bracket 26 (as shown in FIG. 4) and prevent unintentional removal of the accessory bracket 28 from the mounting bracket 26, and an alignment groove 68, that is configured to engage the top or uppermost connection hardware 36 (preferably, the alignment spacer associated with the another of the fastener assemblies, as shown by the arrow in FIG. 3 and FIG. 4) to properly align the accessory bracket 28 with respect to the vehicle 22 (as shown in FIG. 4), such as vertically or other suitable frame of reference, In one embodiment, the lock groove 70 may be further defined in the accessory bracket 28 by opposing offset projections 71, 73 that define an opening of the lock groove 70 and a ramp 75 (e.g., cam surface or the like, etc. to achieve the intended functionality) disposed adjacent one of the projections 71, 73. The ramp 75 may be configured to displace the lock portion 64 from an initial position to facilitate an audible click when the lock portion 64 is returned to the initial position to be disposed in the lock groove 70. The projections 71, 73 are preferably disposed above the lock portion 64 when the lock portion 64 is disposed in an initial position. Simple attachment of the accessory bracket 28 to the mounting bracket 26 by a user concludes with an audible "CLICK" that is confirmation that the accessory bracket 28 is securely installed and locked in place, thereby giving security to the user, all just using hands and without any need of tools.

The pivot groove 66 and the alignment groove 68 may be slightly undersized with respect to the respective connection hardware 36 so as to generate a "squeeze" or slight interference fit on the respective spacer to hold the accessory bracket 28 in place. Additionally, the distance between the offset pivot grooves of adjacent accessory brackets 28 (when at least two are used, such as for example, in the windshield embodiment) may be slightly greater than that distance between the adjacent pockets so as to generate a lateral "squeeze" or slight interference fit to hold the accessory brackets 28 in place with minimal vibration. The lock groove 70 is disposed in aligned registration with at least a portion of the slot 42 and the groove 56 when the accessory bracket 28 is installed such that the lock portion 64 engages all such components to prohibit movement or removal of the accessory bracket 28 after the audible "CLICK" is heard.

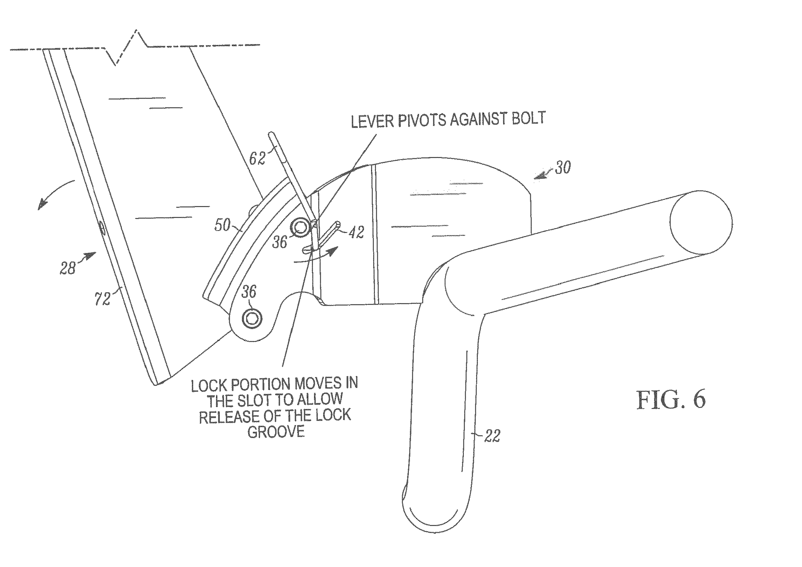

During the process of installing the accessory bracket 28 on the mounting bracket 26, the accessory bracket 28 is pushed in by the user as described below, and the lock portion 64 is moved from an initial position shown in FIGS. 2-5 to a secondary position similar to the release position shown in FIG. 6. A mechanical "CLICK" sound is heard upon the completion of insertion to the fullest extent and the release portion 62 pops up, as described herein.

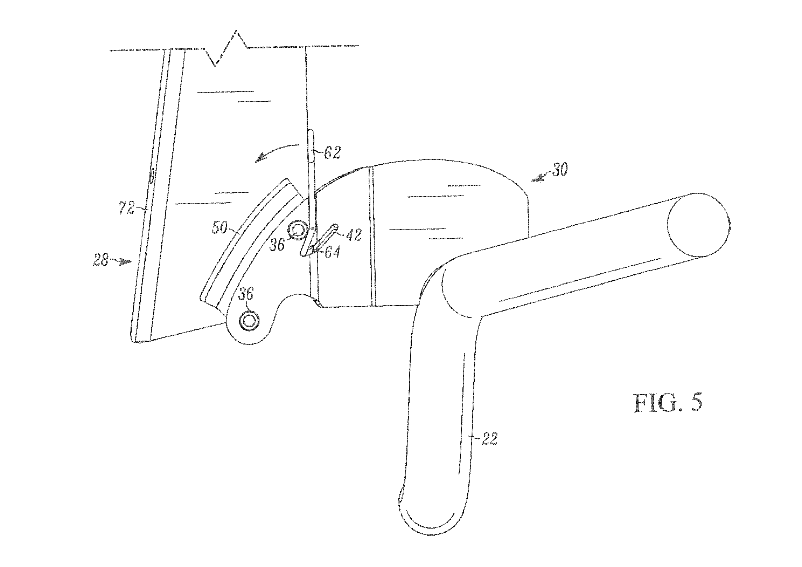

FIG. 5 and 6 are an opposite detailed side elevation view of the accessory mounting assembly illustrated in FIG. 4, further illustrating a release functionality available from the connection mechanism or lock/release mechanism and one of the embodiments and methods of disassembly or disconnecting an accessory from the vehicle. In one embodiment, the unlocking and subsequent removal requires a deliberate action and decision by the user to push the release portion 62 as indicated by the arrow in FIG. 5 while simultaneously pulling straight up and/or out on the accessory bracket 28 (or straight out in the case of a rear rack), as shown by the arrow in FIG. 6. Only then can the accessory bracket 28 be released. The release portion 62 may be located close enough to the accessory bracket 28, but far enough away to easily actuate upon desire with one hand. By pushing down or forward on the release portion 62, the lock portion 64 is rotated out of aligned registration and engagement with the lock groove 70 (as shown in FIG. 6, by contact engagement with the another of the fastener assemblies so as to pivot the lock portion 64 against the central portion) and the accessory bracket 28 can be easily pulled off and out since the binding caused by the lock portion disposed in the aligned grooves and slots and the projections and ramp associated with the lock groove 70 has been reduced or eliminated, in the reverse order of installation, thereby leaving a clean appearance with no "leave behind" that would become unsightly or a safety hazard in an accident. The pocket holds the accessory bracket 28 stiff and without rattle and noise in the vertical position, in other words, the pocket is dimensioned such that it has a width that is slightly less than the width dimension of the accessory bracket 28 so as to "squeeze" or provide a slight interference fit. The direction of the spring pressure of the connection or lock/release mechanism 38 is to the outer side engagement point so as to quell vibration and to hold it stiff. The spring loaded lock portion 64 keeps enough pressure on or is biased in the direction of the accessory bracket 28 such that noise, rattles and vibration are diminished. The release portion 62, when pushed forward in the direction of the arrow, pivots against the top or uppermost connection hardware 36 such that the lock portion 64 is moved further into the slot 42 to allow release of the accessory bracket 28 (as shown in FIG. 6). In one embodiment, the lock portion 64 is movable from an initial position, normally biased into contact with a first end of the slot 42 and the alignment grooves 56, by a ramp 75, defined on the accessory bracket 28 that is adjacent one of a pair of opposing offset projections 71, 73 that define an opening of the lock groove 70 when the accessory bracket 28 is pivoted about the pivot groove 70 when in engagement with the pivot spacer, to facilitate an audible "CLICK" when the alignment groove 68 engages the alignment spacer and the lock portion 64 is returned to the initial position to be disposed in the lock groove 70.

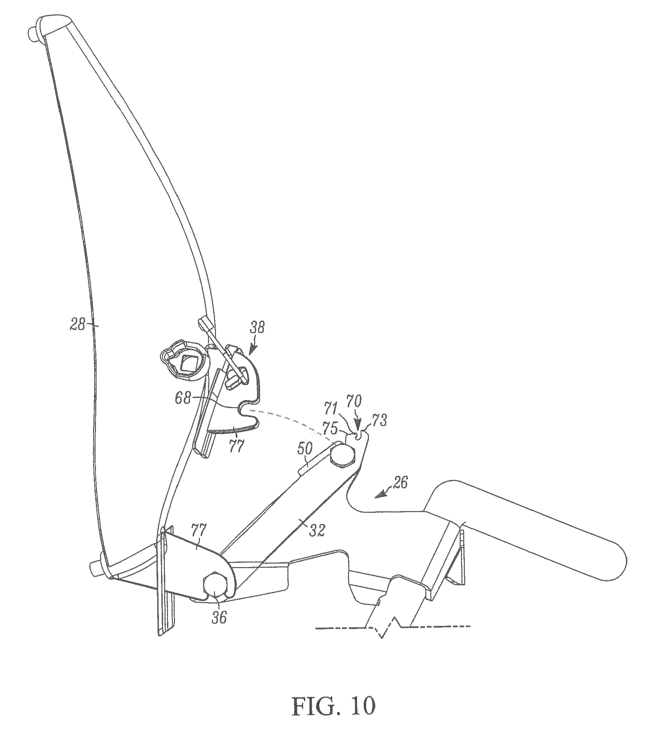

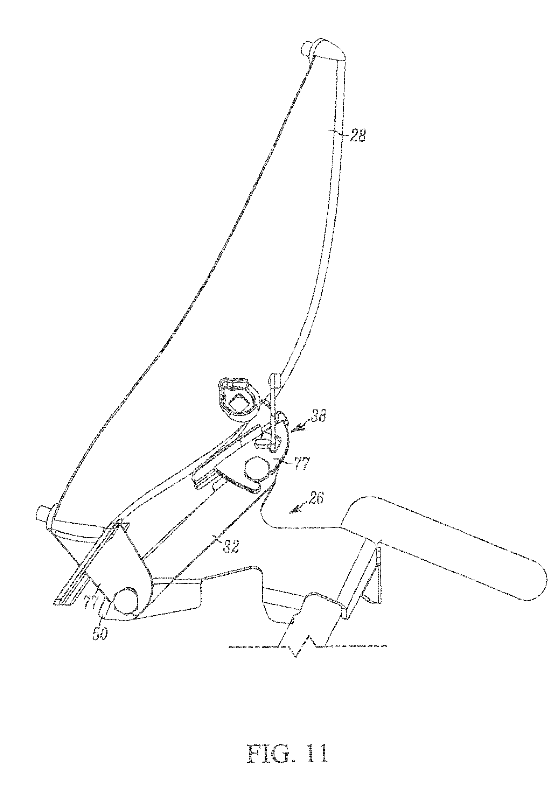

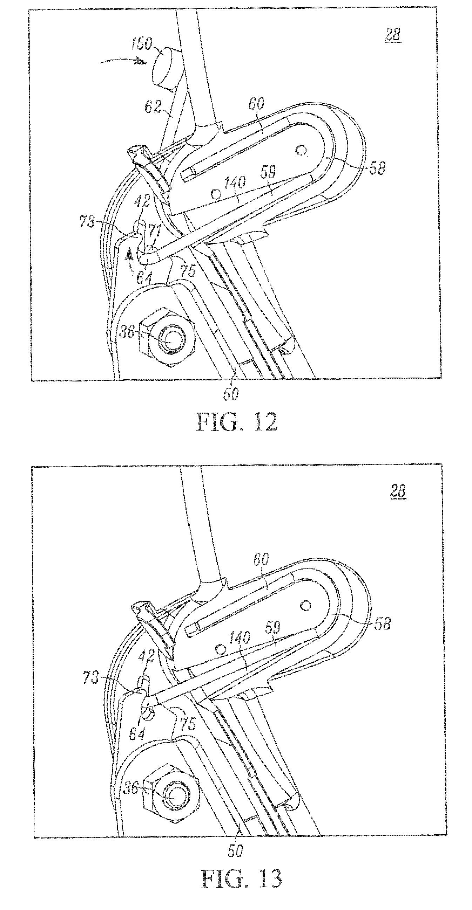

FIG. 7 is a perspective exploded view of an accessory mounting assembly 20 for connection to a vehicle 22 and an accessory 24 in accordance with one embodiment of the present disclosure. The accessory mounting assembly 20 may include an accessory bracket 28, such as, for example for use in connection with mounting an accessory 24 such as a windshield, rack, top-case, saddle bag, or the like, etc. to achieve the intended functionality, removably connected to a mounting bracket 26 by a pair of mounting ears 77. In one embodiment, the accessory bracket 28 may include a slot 42 and a selectively actuate-able connection and/or lock/release mechanism 38 may include a wire formed into a spring-like configuration as shown in FIGS. 7 and 12-16, preferably having a central biasing portion 58, a pre-load portion 60, a release portion 62 and a lock portion 64. FIGS. 12 and 13 are detailed side elevation and partial section views of the accessory mounting assembly illustrated in FIGS. 7 and 9-11, illustrating the connection or loclc/release mechanism 38 and displacement of a lock portion of the connection mechanism, such as for example during installation by the ramp 75 or removal by the release portion 62 moved as shown by the arrow. In one embodiment as shown in such drawings, the central biasing portion 58 may be connected to or disposed within a groove 140 formed in the accessory bracket 28 and having a movable portion 59 that is moved within the groove 140 during the installation and removal of the accessory bracket 28 with respect to the mounting bracket 26. Preferably, the groove 140 tapers from a location near the lock portion 64 to near the pre-load portion 60 where the groove 140 is preferably about the same dimension as the wire or may be slightly smaller to provide a "squeeze" or interference fit to securely mount the connection mechanism to the accessory bracket 28. A cover 150 may be provided to prevent access to the connection mechanism 38, but is removed in FIGS. 12 and 13 for clarity. The pre-load portion 60 may extend from one side of the central biasing portion 58 and may be secured to the accessory bracket 28 in the groove 140 as described herein. The lock portion 64 may extend from another side of the central biasing portion 58 and is preferably passed through the slot 42 in order to facilitate connection with the lock groove 70, which locking function occurs automatically during installation of the accessory bracket 28 to the mounting bracket 26 as described herein. The release portion 62 may extend from the lock portion 64 and have a free distal end that may also include a knob 150 in one embodiment.

Preferably, the slot 42 is formed in one of the mounting ears 77 to simplify construction of the accessory bracket 28 that may be formed by injection molding or other suitable process, such as casting, molding, forming, or the like, etc. In one embodiment, the accessory bracket 28 may be formed from any suitable natural or synthetic material, or the like, etc., such as, for example semi-crystalline polyamide nylon - 6,6 and may include approximately 12% glass fiber. Preferably, the accessory bracket 28 is constructed to have a substantially V-shaped cross-section which doubles the effective wall stiffness, thereby enabling the accessory bracket 28 to have a smaller shape yet provide the intended functionality. Preferably, the interior pattern of the accessory bracket 28 (i.e., the open side of the accessory bracket 28 that is disposed in a direction generally opposite the user of a scooter for example and is not visible to the user when mounted on the scooter), such as, for example, a honeycomb or other desirable pattern. One of skill in the art will recognize that the aesthetically pleasing interior pattern enables the elimination of an obscuration band on the inside of the windshield (hence, a reduction in costs and manufacturing steps) and increases the strength of the accessory bracket 28.

In one embodiment, the accessory bracket 28 may include mounting flanges 72 that may have apertures to further secure other components, such as the windshield 24 or other suitable structure. For example, the mounting flanges 72 may be configured with a base and a cylindrical projection that facilitates mounting a grommet over the cylindrical projection such that when a fastener assembly, such as a thread cutting screw and a flat washer, is used to secure the windshield 24 to the mounting flanges 72, the cylindrical projection limits the amount of compression of the grommet to provide sufficient tension and damping characteristics.

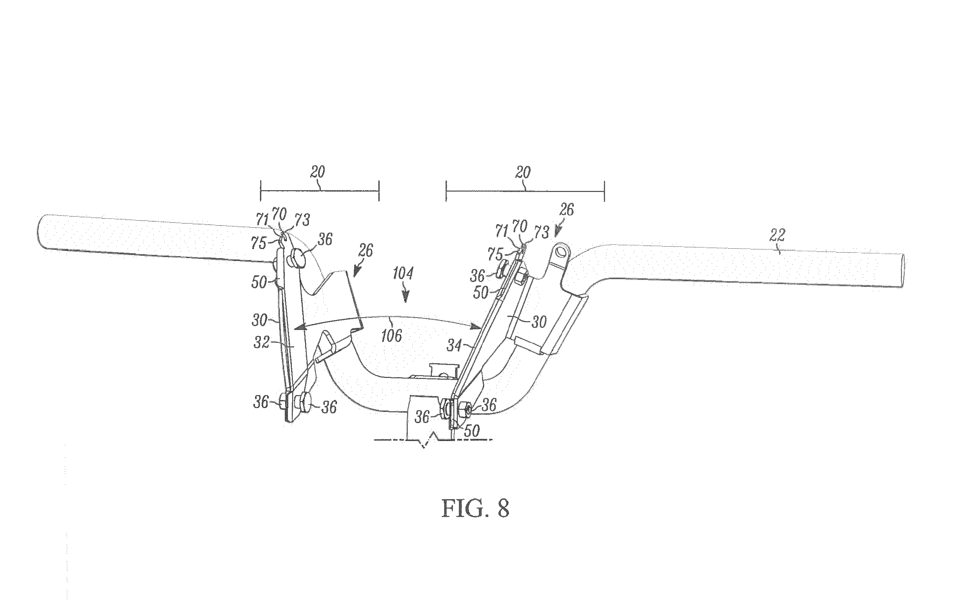

In one embodiment, a pair of accessory mounting assemblies 20 may be used cooperatively to connect the accessory, such as, for example only, the windshield 24, to the vehicle, such as, for example only, a handle bar of a scooter (the remainder of the pair of mounting assemblies will not be illustrated for the sake of brevity and clarity, but will be understood by one of ordinary skill in the art as substantially identical to and/or mirror image of the accessory mounting assembly 20 described herein) (as shown in FIG. 8).

FIG. 8 is a front elevation view of the accessory mounting assembly of FIG. 7, illustrating a mounting bracket 26 secured to the vehicle. In one embodiment, the mounting bracket 26 may include a mounting flange 30, an alignment flange 32, and connection hardware 36. The mounting flange 30 may include a notch 40 to facilitate interface, engagement or connection with the vehicle 22, and apertures 44, 46 disposed distal from the notch 40. In one embodiment, the notch 40 is configured complementary to a component of the vehicle, such as, for example, the handlebar 22 of a scooter to facilitate a welded fixation, bonding or other suitable method, procedure, or the like, etc. to achieve the intended functionality. One of ordinary skill in the art will recognize that the notch 40 may be replaced by other available or suitable structure to facilitate a secure connection to the vehicle, as desired. In one embodiment, a set of openings 100 may be provided in a vehicle cowling 102 or similar body part to allow the mounting bracket 26 and the mounting flange in particular, to disappear so as to not be visible when such cowling 102 or body part is mounted and yet be held steadfast from below. The mounting bracket 30 in one embodiment may be metal inert gas or MIG welded to the handlebar 22 and subsequently painted black which then goes through the normal anti-corrosion black paint line when the handlebar 22 is finished.

The mounting bracket 26 may include a lock groove 70 configured to align in registration with a portion of the slot 42 and engage the lock portion 64 in order to prevent unintentional removal of the accessory bracket 28 from the mounting bracket 26 when the accessory bracket 28 is mounted to the mounting bracket 26 (see also FIGS. 12 and 13). The lock groove 70 may be further defined in the mounting bracket 26 by opposing offset projections 71, 73 that define an opening of the lock groove 70 and a ramp 75 disposed adjacent one of the projections 71, 73. The ramp 75 may be configured to displace the lock portion 64 from an initial position to facilitate an audible click when the lock portion 64 is returned to the initial position to be disposed in the lock groove 70. The projections 71, 73 may be disposed above the lock portion 64 when the lock portion 64 is disposed in an initial position.

As mentioned herein, a second mounting bracket 26 and each of the mounting and the second mounting brackets 26 may include a pivot spacer offset from an alignment spacer to each cooperatively respectively engage the pair of mounting ears 66, 68. The offset described herein with respect to the pivot spacer and the alignment spacer may be selected from one or a combination of the group consisting of horizontal (viewed as left to right on the drawing page), lateral (viewed as side to side on the drawing page), width (viewed as the distance between the horizontally or laterally aligned respective pivot or alignment spacers), vertical (viewed as up and down on the drawing page), longitudinal (viewed as top to bottom on the drawing page), height (viewed as the vertical or longitudinal distance between the pivot and alignment spacers of one of the mounting brackets), length (viewed as the distance between the pivot and alignment spacers of one of the mounting brackets), depth (viewed as in and out of the drawing page), fore-aft (viewed as the distance between the pivot and alignment spacers of one of the mounting brackets along the longitudinal axis of the vehicle), angular (viewed as the angle defined between the longitudinal axes of the pivot and alignment spacers of one of the mounting brackets in any applicable plane(s)) and multi-dimensional (viewed as any combination of any of the foregoing).

In one embodiment, the mounting and second mounting brackets 26 may include alignment flanges 32, 24 that define a pocket 104 (to be recognized as the multi-dimensional space between the alignment flanges 32, 34), the alignment flanges each include a guide portion 50 that leads into the pocket 104. In one embodiment, the guide portions 50 may define a guide included angle that may be approximately 45 degrees, or any other suitable angle between 0.5 and 89.5 degrees in order to guide insertion of the accessory brackets 28 approximately 30 degrees to approximately 60 degrees. An alignment included angle 106 may be defined between the alignment flanges of approximately 45 degrees to approximately 135 degrees. A pair of mounting holes 52, 54 may also be included to facilitate connection of the alignment flanges 32, 34 to the respective mounting bracket 26. The mounting holes 52, 54 preferably align in registration with the apertures 44, 46 so that the connection hardware 36 may secure the alignment flanges 32, 34 and hold spacers or washers 36 (integrally formed or separate components) in desired orientation. The guide included angle (of the guide portions 50) may preferably be defined as any included angle of approximately 30 degrees to approximately 60 degrees and more preferably in the range of approximately 40 degrees to approximately 50 degrees and most preferably at a nominal included angle of approximately 45 degrees, tapering to the opening that corresponds to the pocket defined by the alignment flanges 32, 34 and the offset between respectively aligned pivot spacers and alignment spacers, such that when the accessory bracket(s) are installed there is a slight pre-load or "squeeze" between the alignment flanges 32, 34 of approximately 0.001" - 0.030", more preferably approximately 0.010" - 0.020" and most preferably approximately 0.015" to prevent, dampen, reduce or eliminate vibration of the accessory bracket(s). In one embodiment, the pivot and/or alignment spacers may be integrally formed with or a separate component associated with the fastener assemblies described herein as comprised of bolts, nuts, spacers and/or other suitable conventional fastener components desirable to provide the intended functionality.

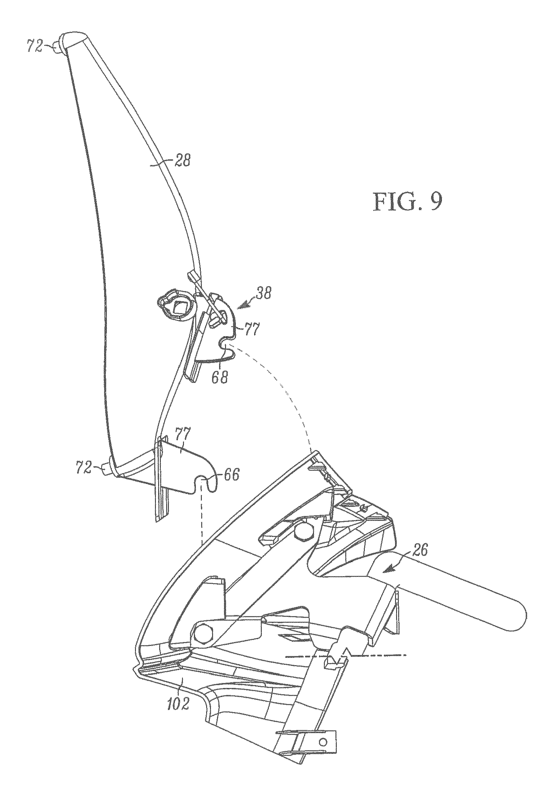

FIGS. 9-11 are side elevation views and partial section views of the accessory mounting assembly 20 illustrated in FIG. 7 illustrating one of the methods of assembly of an accessory 24 to the vehicle 22 in accordance with one embodiment the present disclosure. Pivot groove 66 may be configured to engage the bottom or lowermost connection hardware 36 (preferably the pivot spacer associated with the one of the fastener assemblies) between the alignment guides 32, 34. The lock groove 70 may be configured to align in registration with a portion of the slot 42 and to engage the lock portion 64 of the connection or lock/release mechanism 38 to retain the accessory bracket 28 secured to the mounting bracket 26 and prevent unintentional removal thereof.

The pivot groove 66 and the alignment groove 68 may be slightly undersized with respect to the respective connection hardware 36 so as to generate a "squeeze" or slight interference fit on the respective spacer to hold the accessory bracket 28 in place, such as, for example only, 0.001" - 0.010" undersize or any other suitable dimension given the materials and desired pre-load or interference for the intended functionality. In one embodiment, approximately 0.005" undersize on each spacer provides the intended functionality.

Preferably, the pivot groove 66 is first fitted to the pivot spacer of the one of the fastener assemblies so that the accessory bracket 28 may be pivoted thereabout to move the alignment groove 68 toward engagement with the alignment spacer of the other of the fastener assemblies. In doing so, the lock portion 64 engages the ramp 75 that moves the connected central biasing portion 58 upward within the groove 140 against the pre-load portion 60 that is secured against movement in the groove 140. Continued movement of the accessory bracket 28 about the pivot spacer causes the lock portions 64 to move over the projection 71 and into the lock groove 70 whereupon an audible "CLICK" is heard to confirm that the accessory bracket is securely installed and lock in place (i.e., the lock portion 64 is in contact with the slot 42 in the initial position and the lock groove 70) without the need for tools.

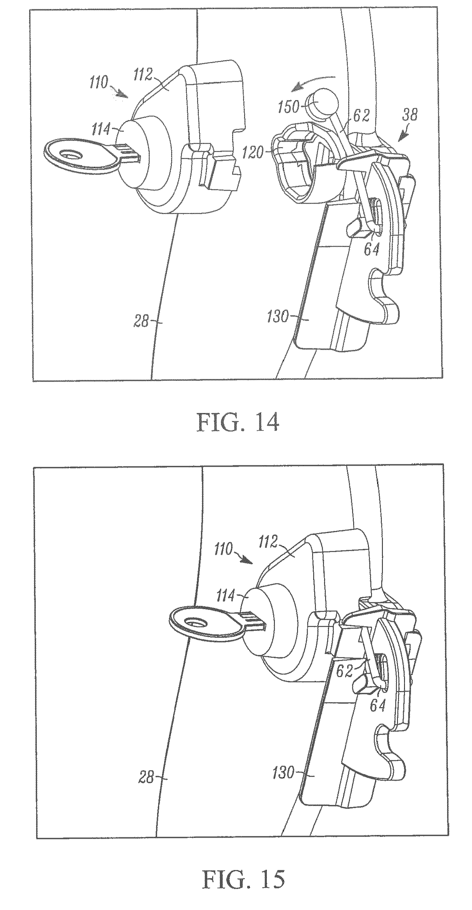

FIGS. 14 and 15 are detailed views of the accessory mounting assembly illustrated in FIG. 7, illustrating a portion of an accessory bracket 28 in an unsecured configuration and a secured configuration. In this embodiment, a lock assembly 110 may be configured to selectively securely engage the accessory bracket 26 such that access to the release portion 62 is restricted. The lock assembly 110 may include a cover 112, key cylinder 114 and a locking tab 116 (see FIG. 7) connected to the key cylinder 114 in a conventional manner such that rotational movement of the key cylinder 114 is translated into movement of the locking tab 116. The locking tab 116 may include a projection 118 configured to be received through a channel 120 formed in the accessory bracket 28 such that when the locking tab 116 is rotated by the key cylinder 114, the locking tab 116 is disposed to engage the generally cylindrical portion of the accessory bracket 28 configured to receive the key cylinder 114, thereby preventing removal of the accessory bracket 28 from the mounting bracket 26. In another embodiment, the cover portion 112 also houses or covers the release portion 62 of the connection or lock/release mechanism 38 so that actuation of the release portion 62 cannot be enacted or facilitated, whereby the locking portion 64 remains disposed in the locking groove 70 and the accessory bracket 28 cannot be removed from the mounting bracket 26. A skirt 130 may be molded with the accessory bracket or added thereto to cover the openings 100 in the cowling 102 to prevent environmental damage to the vehicle, such as blocking the ingress of rain, wind, snow, etc. or the like.

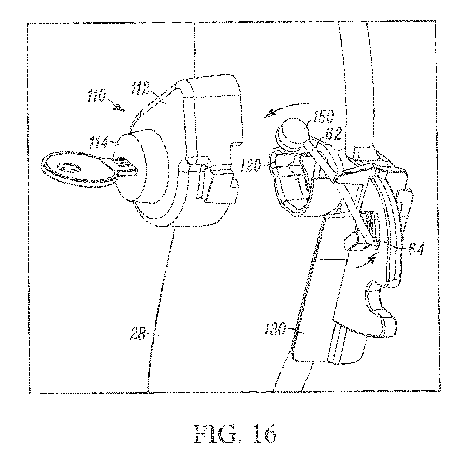

FIG. 16 is a detailed side elevation and partial section view of the connection or lock/release mechanism 38 illustrated in FIG. 12, illustrating displacement of the lock portion 64 (see also FIG. 13 for an example) of the connection mechanism 38 as a result of movement of a release portion 62 in the direction of the arrow in the slot 42 away from the initial position in one of the methods of disassembly, which is basically the reverse of assembly.

In one embodiment, a method of installing an accessory 24 on a vehicle including a mounting bracket 26 having a pivot spacer and a alignment spacer may include: connecting the accessory 24 to an accessory bracket 28 including a pivot groove 66 and an alignment groove 68; engaging the pivot spacer with the pivot groove 66 to pivotally connect the accessory bracket 28 to the mounting bracket 26; pivoting the accessory bracket 28 to move the alignment groove 68 toward the alignment spacer; and displacing a lock portion 64 of a connection mechanism 38 disposed on one of the accessory bracket 28 and the mounting bracket 26 from an initial position to facilitate an audible click when the alignment groove 68 engages the alignment spacer and the lock portion 64 is returned to the initial position to be disposed in a lock groove 70 formed in one of the accessory bracket 28 and the mounting bracket 26.

The preceding detailed description merely sets forth some examples and embodiments of the present disclosure and that numerous changes to the disclosed embodiments can be made in accordance with the disclosure herein without departing from its spirit or scope. The preceding description, therefore, is not meant to limit the scope of the disclosure but to provide sufficient disclosure to one of ordinary skill in the art to practice the invention without undue burden.

### THE FOLLOW1NG STATEMENTS DESCRIBE VAVIOUS EMBODIMENTS OF THE INVENTION

1. An accessory mounting assembly comprising:
   a mounting bracket including a slot and a connection mechanism including a central biasing portion movably connected to the mounting bracket, a pre-load portion extending from one side of the central biasing portion and having a distal end connected to the mounting bracket, a lock portion extending from another side of the central biasing portion through the slot, and a release portion extending from the lock portion and having a free distal end; and
   an accessory bracket removably connected to the mounting bracket, the accessory bracket including a lock groove configured to align in registration with a portion of the slot and engage the lock portion in order to prevent unintentional removal of the accessory bracket from the mounting bracket.
2. The accessory mounting assembly of statement 1, wherein the lock groove is further defined in the accessory bracket by opposing offset projections that define an opening of the lock groove and a ramp disposed adjacent one of the projections.
3. The accessory mounting assembly of statement 2, wherein the ramp is configured to displace the lock portion from an initial position to facilitate an audible click when the lock portion is returned to the initial position to be disposed in the lock groove.
4. The accessory mounting assembly of statement 2, wherein the projections are disposed above the lock portion when the lock portion is disposed in an initial position.
5. The accessory mounting assembly of statement 1, further comprising an alignment portion connected to the mounting bracket, the alignment portion including a pocket configured to engage a mounting flange of the accessory bracket and a groove aligned in registration with a portion of the slot.
6. The accessory mounting assembly of statement 5, wherein the pocket is defined by a pair of alignment flanges spaced by a pivot spacer.
7. The accessory mounting assembly of statement 5, wherein the alignment flanges each include a guide portion that leads into the pocket.
8. The accessory mounting assembly of statement 7, where the guide portions define a guide included angle of approximately 30 degrees to approximately 60 degrees.
9. The accessory mounting assembly of statement 1, wherein the mounting bracket includes an alignment portion connected to the mounting bracket by connection hardware including a pair of offset fastener assemblies, the alignment portion including a pocket defined by a pair of spaced alignment flanges separated by a pivot spacer associated with one of the fastener assemblies and an alignment spacer associated with another of the fastener assemblies, the pocket configured to engage a mounting flange of the accessory bracket, the alignment flanges each including a groove aligned in registration with a portion of the slot, wherein the pre-load portion is connected to the one of the fastener assemblies, the central biasing portion is connected to the another of the fastener assemblies and the release portion is contiguous with the another of the fastener assemblies, wherein the accessory bracket includes a pivot groove configured to engage the pivot spacer and an alignment groove configured to engage the alignment spacer, and wherein the lock portion is movable from an initial position, normally biased into contact with a first end of the slot and the alignment grooves, by a ramp, defined on the accessory bracket that is adjacent one of a pair of opposing offset projections that define an opening of the lock groove when the accessory bracket is pivoted about the pivot groove when in engagement with the pivot spacer, to facilitate an audible click when the alignment groove engages the alignment spacer and the lock portion is returned to the initial position to be disposed in the lock groove.
10. A method of installing an accessory on a vehicle including a mounting bracket having a pivot spacer and a alignment spacer, the method comprising:
   connecting an accessory bracket to the accessory, the accessory bracket including a pivot groove and an alignment groove;
   engaging the pivot spacer with the pivot groove to pivotally connect the accessory bracket to the mounting bracket;
   pivoting the accessory bracket to move the alignment groove toward the alignment spacer; and
   displacing a lock portion of a connection mechanism disposed on one of the accessory bracket and the mounting bracket from an initial position to facilitate an audible click when the alignment groove engages the alignment spacer and the lock portion is returned to the initial position to be disposed in a lock groove formed in one of the accessory bracket and the mounting bracket.
11. An accessory mounting assembly comprising:
   an accessory bracket removably connected to a mounting bracket by a pair of mounting ears, the accessory bracket including a slot and a connection mechanism including a central biasing portion connected to the accessory bracket and having a movable portion, a pre-load portion extending from one side of the central biasing portion and secured to the accessory bracket, a lock portion extending from another side of the central biasing portion through the slot, and a release portion extending from the lock portion and having a tree distal end; and
   a mounting bracket including a lock groove configured to align in registration with a portion of the slot and engage the lock portion in order to prevent unintentional removal of the accessory bracket from the mounting bracket.
12. The accessory mounting assembly of statement 11, wherein the lock groove is further defined in the mounting bracket by opposing offset projections that define an opening of the groove and a ramp disposed adjacent one of the projections.
13. The accessory mounting assembly of statement 12, wherein the ramp is configured to displace the lock portion from an initial position to facilitate an audible click when the lock portion is returned to the initial position to be disposed in the lock groove.
14. The accessory mounting assembly of statement 12, wherein the projections are disposed above the lock portion when the lock portion is disposed in an initial position.
15. The accessory mounting assembly of statement 11, further comprising a second mounting bracket and each of the mounting and the second mounting brackets including a pivot spacer offset from an alignment spacer to each cooperatively engage the pair of mounting ears.
16. The accessory mounting assembly of statement 15, wherein the offset is selected from one or a combination of the group consisting of horizontal, lateral, width, vertical, longitudinal, height, length, depth, fore-aft, multi-dimensional and angular.
17. The accessory mounting assembly of statement 15, wherein the mounting and second mounting brackets include alignment flanges that define a pocket, the alignment flanges each include a guide portion that leads into the pocket.
18. The accessory mounting assembly of statement 17, where the guide portions define a guide included angle of approximately 30 degrees to approximately 60 degrees.
19. The accessory mounting assembly of statement 17, wherein an alignment included angle is defined between the alignment flanges of approximately 45 degrees to approximately 135 degrees.
20. The accessory mounting assembly of statement 11, further comprising a lock assembly configured to selectively securely removably engage the accessory bracket such that access to the free distal end of the release portion is prohibited.

## Claims

1. An accessory mounting assembly comprising:
a mounting bracket including a slot and a connection mechanism including a central biasing portion movably connected to the mounting bracket, a pre-load portion extending from one side of the central biasing portion and having a distal end connected to the mounting bracket, a lock portion extending from another side of the central biasing portion through the slot, and a release portion extending from the lock portion and having a free distal end; and
an accessory bracket removably connected to the mounting bracket, the accessory bracket including a lock groove configured to align in registration with a portion of the slot and engage the lock portion in order to prevent unintentional removal of the accessory bracket from the mounting bracket.

2. The accessory mounting assembly of claim 1, wherein the lock groove is further defined in the accessory bracket by opposing offset projections that define an opening of the lock groove and a ramp disposed adjacent one of the projections.

3. The accessory mounting assembly of claim 1 or claim 2, further comprising an alignment portion connected to the mounting bracket, the alignment portion including a pocket configured to engage a mounting flange of the accessory bracket and a groove aligned in registration with a portion of the slot.

4. The accessory mounting assembly of claim 3, wherein the pocket is defined by a pair of alignment flanges spaced by a pivot spacer; or
wherein the alignment flanges each include a guide portion that leads into the pocket.

5. The accessory mounting assembly of any one or more of the preceding claims, wherein the mounting bracket includes an alignment portion connected to the mounting bracket by connection hardware including a pair of offset fastener assemblies, the alignment portion including a pocket defined by a pair of spaced alignment flanges separated by a pivot spacer associated with one of the fastener assemblies and an alignment spacer associated with another of the fastener assemblies, the pocket configured to engage a mounting flange of the accessory bracket, the alignment flanges each including a groove aligned in registration with a portion of the slot, wherein the pre-load portion is connected to the one of the fastener assemblies, the central biasing portion is connected to the another of the fastener assemblies and the release portion is contiguous with the another of the fastener assemblies, wherein the accessory bracket includes a pivot groove configured to engage the pivot spacer and an alignment groove configured to engage the alignment spacer, and wherein the lock portion is movable from an initial position, normally biased into contact with a first end of the slot and the alignment grooves, by a ramp, defined on the accessory bracket that is adjacent one of a pair of opposing offset projections that define an opening of the lock groove when the accessory bracket is pivoted about the pivot groove when in engagement with the pivot spacer, to facilitate an audible click when the alignment groove engages the alignment spacer and the lock portion is returned to the initial position to be disposed in the lock groove.

6. A method of installing an accessory on a vehicle including a mounting bracket having a pivot spacer and a alignment spacer, the method comprising:
connecting an accessory bracket to the accessory, the accessory bracket including a pivot groove and an alignment groove;
engaging the pivot spacer with the pivot groove to pivotally connect the accessory bracket to the mounting bracket;
pivoting the accessory bracket to move the alignment groove toward the alignment spacer; and
displacing a lock portion of a connection mechanism disposed on one of the accessory bracket and the mounting bracket from an initial position to facilitate an audible click when the alignment groove engages the alignment spacer and the lock portion is returned to the initial position to be disposed in a lock groove formed in one of the accessory bracket and the mounting bracket.

7. An accessory mounting assembly comprising:
an accessory bracket removably connected to a mounting bracket by a pair of mounting ears, the accessory bracket including a slot and a connection mechanism including a central biasing portion connected to the accessory bracket and having a movable portion, a pre-load portion extending from one side of the central biasing portion and secured to the accessory bracket, a lock portion extending from another side of the central biasing portion through the slot, and a release portion extending from the lock portion and having a free distal end; and
a mounting bracket including a lock groove configured to align in registration with a portion of the slot and engage the lock portion in order to prevent unintentional removal of the accessory bracket from the mounting bracket.

8. The accessory mounting assembly of claim 7, wherein the lock groove is further defined in the mounting bracket by opposing offset projections that define an opening of the groove and a ramp disposed adjacent one of the projections.

9. The accessory mounting assembly of any one or more of the preceding claims, wherein the ramp is configured to displace the lock portion from an initial position to facilitate an audible click when the lock portion is returned to the initial position to be disposed in the lock groove.

10. The accessory mounting assembly of any one or more of the preceding claims, wherein the projections are disposed above the lock portion when the lock portion is disposed in an initial position.

11. The accessory mounting assembly of any one or more of claims 6 to 10, further comprising a second mounting bracket and each of the mounting and the second mounting brackets including a pivot spacer offset from an alignment spacer to each cooperatively engage the pair of mounting ears.

12. The accessory mounting assembly of claim 11, wherein the offset is selected from one or a combination of the group consisting of horizontal, lateral, width, vertical, longitudinal, height, length, depth, fore-aft, multi-dimensional and angular; or
wherein the mounting and second mounting brackets include alignment flanges that define a pocket, the alignment flanges each include a guide portion that leads into the pocket.

13. The accessory mounting assembly of any one or more of the preceding claims, where the guide portions define a guide included angle of approximately 30 degrees to approximately 60 degrees.

14. The accessory mounting assembly of claim 12, wherein an alignment included angle is defined between the alignment flanges of approximately 45 degrees to approximately 135 degrees.

15. The accessory mounting assembly of any one or more of the preceding claims, further comprising a lock assembly configured to selectively securely removably engage the accessory bracket such that access to the free distal end of the release portion is prohibited.
